# FASCICULE DE BREVET EUROPEEN

(11) **EP 0 458 700 B1**
(45) Date de publication et mention de la délivrance du brevet: **11.08.1993**
(21) Numéro de dépôt: 91401325.5
(22) Date de dépôt: 23.05.1991
(51) Int. Cl.: F16L 21/06, F01N 7/18

(54) **Dispositif d'accouplement étanche de deux tubes lisses, disposés bout à bout**
Abgedichtete Verbindung zweier stumpf aneinanderstossender glatter Rohre
Sealed butt end joining of two smooth pipes

(30) Priorité: 23.05.1990 FR 9006475
(43) Date de publication de la demande: 27.11.1991
(73) Titulaire: Etablissements CAILLAU, F-92130 Issy-les-Moulineaux (FR)
(72) Inventeur: Calmettes, Lionel, F-41200 Romorantin Lanthenay (FR); Detable, Pascal, F-41200 Romorantin Lanthenay (FR)
(74) Mandataire: Descourtieux, Philippe

(56) Documents cités:
- DE-A- 3 843 738
- FR-A- 2 597 169
- GB-A- 1 174 820
- US-A- 3 479 066
- US-A- 4 667 505

## Description

On connaît déjà; notamment par la demande de brevet FR-A-2 597 169, un dispositif pour l'accouplement étanche de deux tubes lisses, utilisable en particulier pour le raccordement bout à bout de deux éléments de conduit d'échappement d'un moteur pour véhicule.

Le dispositif connu comporte un manchon métallique, fendu longitudinalement, entourant partiellement les deux tubes dans la région du raccordement, ce manchon présentant deux lèvres radiales assemblées et serrées par deux vis ou boulons qui les traversent. Le brevet précité propose d'assurer une rigidification des lèvres par un repli, s'étendant parallèlement à la fente et dirigé à l'opposé de cette dernière.

On a cependant constaté que cette rigidification des lèvres du manchon est fréquemment insuffisante pour transmettre correctement au manchon les efforts de serrage des vis ou boulons et assurer ainsi l'immobilisation complète et une étanchéité satisfaisante du raccordement des deux tubes.

L'invention a donc pour objet un dispositif pour l'accouplement étanche de deux tubes lisses de même diamètre disposés bout à bout, ce dispositif étant du type qui vient d'être rappelé mais comportant divers perfectionnements destinés à remédier aux inconvénients des dispositifs connus.

Selon l'invention, le manchon présente deux extrémités tronconiques situées de part et d'autre d'une portion centrale cylindrique, destinée à être montée à cheval sur la zone de raccordement des deux tubes. D'autre part, chaque lèvre radiale comporte au moins un élément de rigidification s'étendant entre ladite lèvre et chacune des extrémités tronconiques correspondantes.

Grâce à ces dispositions, le serrage des tubes est particulièrement efficace sur toute la longueur du manchon, même s'il n'existe qu'une seule vis ou qu'un seul boulon de serrage des lèvres, et l'étanchéité du raccordement s'en trouve également améliorée par rapport à celle que l'on peut obtenir avec les dispositifs connus.

L'invention sera mieux comprise et diverses caractéristiques secondaires apparaîtront au cours de la description qui va suivre de divers modes de réalisation avantageux en référence aux dessins annexés dans lesquels :
- La figure 1 est une vue extérieure en perspective d'un dispositif selon l'invention, avant serrage des tubes à accoupler.
- La figure 2 est une coupe transversale du dispositif, la coupe étant faite dans l'axe du boulon de fixation.
- La figure 3 est une vue, suivant flèche **F** de la figure 2, de l'intérieur du dispositif.
- La figure 4 est une coupe analogue à la figure 2, dans le cas d'une variante de réalisation de l'invention.
- La figure 5 est une coupe suivant **V-V** de la figure 4.

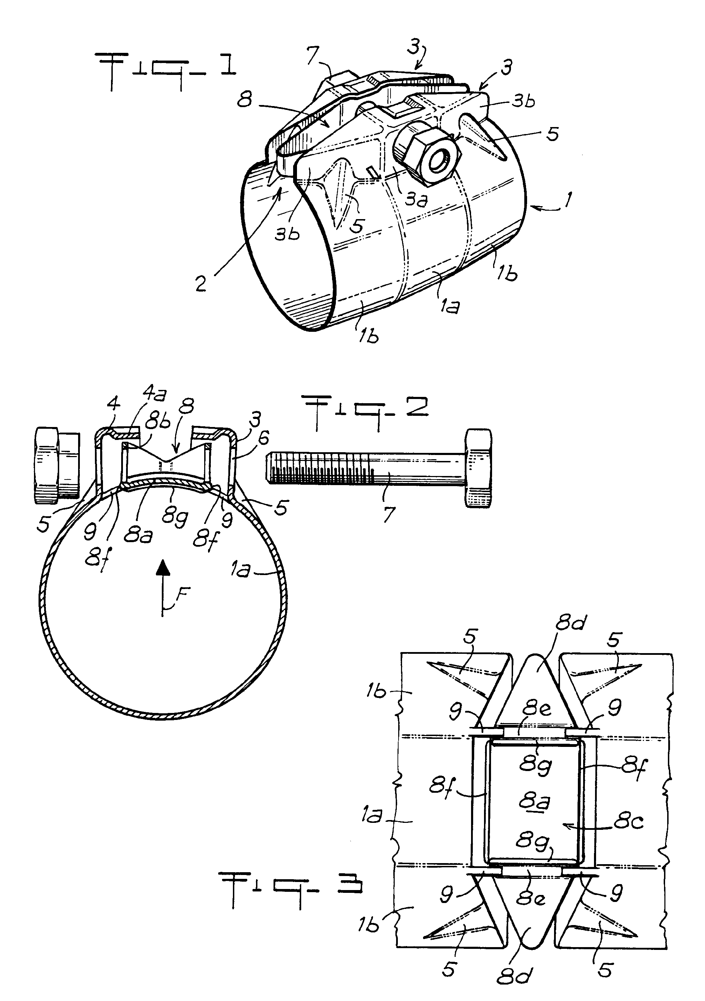

Si l'on se reporte tout d'abord aux figures 1, 2 et 3, on voit que le dispositif d'accouplement étanche comporte essentiellement un manchon, généralement métallique, désigné par la référence générale **1** et présentant une fente longitudinale **2**. Les bords de la fente sont définis par des lèvres sensiblement radiales **3** dont la grande rigidité est assurée par diverses dispositions que l'on va préciser.

Le manchon proprement dit comporte une partie centrale **1a** cylindrique et deux extrémités **1b** légèrement tronconiques, leur plus petit diamètre étant situé sur les deux faces terminales du manchon. Dans la pratique, la différence entre le diamètre de la partie cylindrique **1a** (de l'ordre de 60 millimètres) et le petit diamètre des extrémités **1b** sera très faible, de l'ordre du millimètre ou de quelques millimètres. Sur les dessins, on a volontairement exagéré cette différence.

Chaque lèvre **3** comprend une partie centrale **3a** correspondant sensiblement à la largeur de la partie centrale **1a** du manchon, et deux extrémités **3b,** inclinées vers la fente **2**, par rapport à la partie centrale **3a**. Cette structure procure déjà une certaine rigidité aux lèvres **3,** mais on peut encore l'améliorer de façon importante.

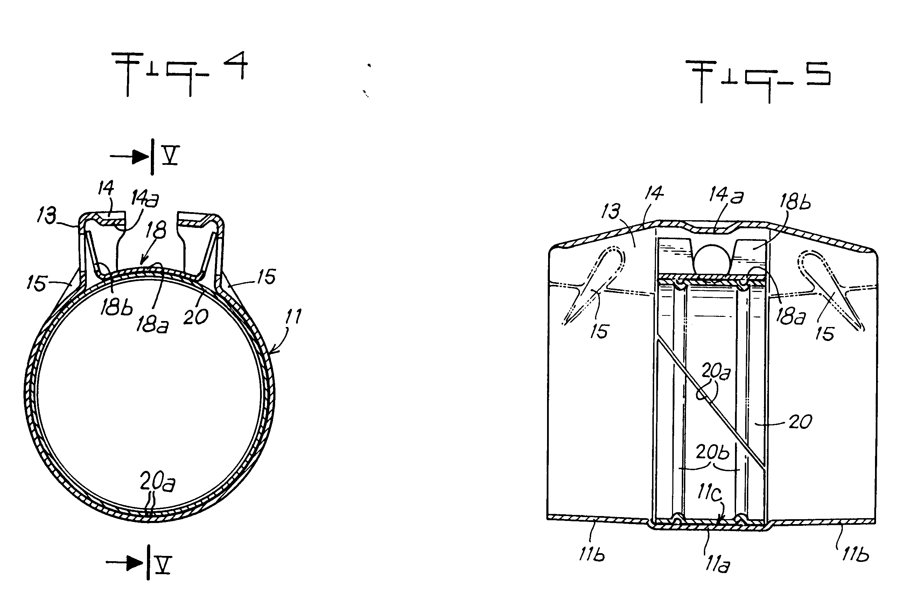

D'une part, le bord supérieur de chaque lèvre **3** est renforcé par un repli **4** s'étendant au-dessus de la fente longitudinale, de préférence parallèlement à celle-ci. Ce repli est lui-même avantageusement renforcé dans sa zone centrale par un embouti **4a**, en creux, bien visible sur la figure 2.

D'autre part, dans les zones d'extrémité **3b** de chaque lèvre, il est prévu un élément de rigidification **5** qui relie la lèvre et l'extrémité **1b** correspondante du manchon. De préférence, cet élément de rigidification sera constitué par un gousset **5** résultant d'un embouti de la tôle du manchon, faisant saillie à l'extérieur de celui-ci, et incliné, par rapport au plan transversal passant par sa racine sur l'extrémité **3b** de la lèvre, vers la petite base terminale de l'extrémité tronconique **1b** correspondante.

Ainsi chaque lèvre **3** a une forme générale en caisson ouvert, solidement ancré sur la paroi du manchon **1**, notamment au voisinage des extrémités tronconiques de celui-ci.

Les parties centrales **3a** des deux lèvres **3** sont percées chacune d'un trou **6** permettant le passage d'un boulon **7**.

L'homme de métier a déjà compris l'utilisation du dispositif qui vient d'être décrit. Le manchon **1** est enfilé sur l'un des tubes (non représentés) puis l'autre tube est lui-même enfilé dans le manchon. Après avoir vérifié que les extrémités des deux tubes sont en contact l'une avec l'autre dans la partie centrale **1a** du manchon, l'opérateur serre fortement le boulon **7** pour rapprocher les deux lèvres **3** l'une de l'autre en réduisant la largeur de la fente **2**.

Grâce à ses extrémités tronconiques **1b** et à la rigidité de ses lèvres **3**, le manchon serre énergiquement les tubes, notamment par les faces terminales des extrémités **1b**. L'effort de serrage du boulon **7** est en effet transmis presque intégralement aux extrémités **1b**, notamment par les goussets **5.**

L'étanchéité du raccordement est d'autre part assurée par le contact entre la surface extérieure des tubes et la surface interne de la partie centrale **1a** du manchon, mais des fuites peuvent se produire en regard de la fente du manchon, dans la mesure où les lèvres **3** ne sont pas venues en contact l'une avec l'autre.

Pour pallier ces fuites résiduelles, l'invention prévoit un organe complémentaire d'étanchéité qui est disposé au moins entre les lèvres **3** de la fente **2.**

Ainsi qu'on le voit bien sur la figure 2, cet organe complémentaire est constitué par un "cavalier" **8** dont la section transversale est sensiblement en forme de U.

Le fond **8a** du cavalier présente un profil courbe dont le diamètre est sensiblement égal à celui de la partie centrale **1a** du manchon. Les flancs **8b** du cavalier sont de préférence parallèles l'un à l'autre ou très légèrement évasés. Leur hauteur est au plus égale à celle des faces en regard des lèvres **3.**

Dans le sens longitudinal, le cavalier **8** est divisé en trois parties bien visibles sur la figure 3. La partie centrale **8c** présente une longueur sensiblement égale à la largeur de la partie centrale **1a** du manchon tandis que les deux extrémités **8d** ont une forme approximativement triangulaire. Ces dernières sont séparées de la partie centrale **8c** par deux rainures **8e**, en creux sur la face interne du fond **8a** et, par conséquent, faisant saillie vers l'extérieur.

Des petites pattes **9**, réalisées par découpage et pliage dans les lèvres **3**, s'étendent transversalement à la fente **2** et, lorsque le cavalier **8** est en place, sont logées dans ses rainures **8e**. Avant le serrage du manchon **1** dans les conditions exposées plus haut, le cavalier **8** est guidé transversalement par la coopération des pattes **9** et des rainures **8e** et ne peut s'échapper dès que le boulon **7** est mis en place.

On soulignera enfin que des joncs d'étanchéité, constitués par des emboutis de faible profondeur, sont avantageusement prévus, dans la partie centrale du cavalier, d'une part, sur les flancs **8b**, au voisinage du raccordement avec le fond **8a** (joncs **8f**), d'autre part, sur le fond **8a** lui-même, au voisinage des rainures **8e** (joncs **8g**). La saillie des joncs **8f** sur les faces externes des flancs **8b** de même que celle des joncs **8g** sur la face interne du fond **8a** sera de préférence de l'ordre de quelques dixièmes de millimètre ; pour plus de clarté elle a été volontairement grossie sur les figures 2 et 3.

Au cours du serrage du boulon **7**, les flancs **8b** du cavalier viennent prendre appui de façon étanche sur les faces en regard des lèvres **3,** cependant que le fond **8a** est fortement appliqué sur la surface extérieure des tubes, obturant ainsi de façon quasi complète la zone de raccordement des tubes, grâce en particulier à la présence des joncs **8f** et **8g**.

Si l'on se reporte maintenant aux figures 4 et 5, on voit une variante de réalisation de l'organe complémentaire d'étanchéité. Les éléments déjà décrits portent les mêmes références, augmentées de 10.

Le manchon **11,** la structure de ses lèvres **13** ainsi que leurs moyens de rigidification sont identiques à ce qui a été précédemment décrit. Cependant la partie centrale **11a** est légèrement emboutie vers l'extérieur de façon à délimiter un logement interne annulaire **11c** de faible profondeur.

L'organe complémentaire d'étanchéité est constitué par une bande mince **20,** de préférence métallique, enroulée sur elle-même et disposée dans le logement **11c.** Les deux extrémités **20a** de la bande sont découpées en biseau ainsi qu'on le voit bien sur la figure 5 et sa largeur est sensiblement égale à celle du logement **11c** tandis que son épaisseur est pratiquement identique à la profondeur dudit logement. (On notera que les deux extrémités **20a** de la bande **20** sont, de préférence, situées à l'opposé des lèvres **13** du manchon, comme indiqué sur la figure 4 ; la représentation selon la figure 5 est néanmoins destinée à faciliter la compréhension). Sur chaque bord longitudinal de la bande est prévu au moins un embouti en forme de jonc **20b** faisant saillie sur la face interne de la bande.

Un cavalier **18,** également constitué par une tôle mince à section en U, est fixé par son fond **18a** à la bande **20,** par exemple au moyen de points de soudure. De préférence la longueur du cavalier **18** est égale à la largeur de la bande **20.**

Au cours du serrage du boulon (non représenté), la bande **20** est fortement appliquée sur les tubes et ses joncs **20b,** qui sont placés de part et d'autre de la zone de raccordement des tubes, sont quelque peu écrasés élastiquement sur la surface extérieure des tubes. Dans la zone de la fente du manchon, le cavalier **18** applique lui-même la bande **20** sur les tubes en assurant la pression nécessaire à une bonne étanchéité. La longueur de la bande **20** est telle qu'après serrage ses extrémités **20a** sont appliquées l'une contre l'autre évitant ainsi pratiquement toute fuite dans cette zone.

## Revendications

1. Dispositif pour l'accouplement étanche de deux tubes lisses de même diamètre disposés bout à bout, notamment pour l'accouplement de deux éléments d'un conduit d'échappement d'un moteur, tel que ceux des véhicules automobiles, ledit dispositif étant constitué par un manchon **(1)** en une seule pièce comportant une fente longitudinale **(2)** munie de deux lèvres radiales d'assemblage **(3)**, ledit manchon entourant les extrémités en regard des deux tubes et étant serré sur ceux-ci par une vis ou un boulon **(7)** traversant lesdites lèvres radiales, caractérisé en ce que le manchon **(1)** présente deux extrémités tronconiques **(1b)** situées de part et d'autre d'une portion centrale cylindrique **(1a)** destinée à être montée à cheval sur la zone de raccordement des deux tubes et en ce que chaque lèvre **(3)** de la fente longitudinale **(2)** comporte au moins un élément de rigidification **(5)** s'étendant entre ladite lèvre et chacune des extrémités tronconiques correspondantes du manchon.

2. Dispositif selon la revendication 1, caractérisé en ce que chaque lèvre **(3)** est renforcée par un repli **(4)** s'étendant au-dessus de la fente longitudinale **(2)**, parallèlement à celle-ci.

3. Dispositif selon la revendication 2, caractérisé en ce que le repli **(4)** de chaque lèvre est lui-même renforcé par au moins un embouti central **(4a)**.

4. Dispositif selon l'une quelconque des revendications 1 à 3, caractérisé en ce que l'élément de rigidification d'une lèvre est constitué par un gousset s'étendant, au voisinage d'une extrémité tronconique du manchon, entre ladite lèvre et ladite extrémité, la direction dudit gousset étant inclinée, par rapport au plan transversal passant par sa racine sur la lèvre, vers la petite base terminale de l'extrémité tronconique.

5. Dispositif selon la revendication 1, caractérisé en ce qu'un organe complémentaire d'étanchéité **(8)** est disposé au moins entre les lèvres **(3)** de la fente longitudinale **(2)**.

6. Dispositif selon la revendication 5, caractérisé en ce que l'organe complémentaire d'étanchéité est constitué par un cavalier **(8)** dont la section est généralement an forme de U, les deux flancs **(8b)** du cavalier étant susceptibles de prendre appui sur les faces en regard des deux lèvres radiales **(3)** tandis que son fond **(8a)** est susceptible de venir en appui, dans la région de la fente longitudinale **(2)**, sur la zone de contact des deux tubas non recouverte par le manchon.

7. Dispositif selon la revendication 6, caractérisé en ce qu'au moins une patte **(9)** est prévue sur le manchon pour s'étendre dans la fente longitudinale **(2)**, ladite patte coopérant avec une rainure transversale **(8e)** ménagée, vers l'extérieur, dans le fond **(8a)** du cavalier.

8. Dispositif selon la revendication 5, caractérisé en ce que l'organe complémentaire d'étanchéité est constitué par une bande métallique **(20)** enroulée sur elle-même, ladite bande entourant complètement les extrémités en regard des deux tubes, cependant qu'un logement cylindrique **(11c)** pour ledit organe est prévu dans la partie centrale interne **(11a)** du manchon.

9. Dispositif selon la revendication 8, caractérisé en ce que les extrémités **(20a)** de la bande métallique sont découpées en biseau.

10. Dispositif selon la revendication 8, caractérisé en ce que chacun des bords longitudinaux de la bande métallique **(20)** présente au moins un jonc d'étanchéité **(20b)** faisant saillie vers l'intérieur de la bande après son enroulement sur elle-même.

## Patentansprüche

1. Vorrichtung zum dichten Kuppeln zweier stumpf aneinanderstoßender glatter Rohre gleichen Durchmessers, insbesondere zum Kuppeln zweier Elemente einer Auspuffleitung eines Motors, wie solcher von Kraftfahrzeugen, welche Vorrichtung durch eine einstückige Hülse (1) mit einem mit zwei radialen Verbindungslippen (3) versehenen Längsschlitz (2) gebildet ist, wobei die Hülse die einander zugewandten Enden der beiden Rohre umgibt und durch eine(n) durch die radialen Lippen gehende(n) Schraube oder Bolzen (7) über diese gespannt ist, dadurch gekennzeichnet, daß die Hülse (1) zwei kegelstumpfförmige Enden (1b) aufweist, die beiderseits eines zylindrischen Mittelteils (1a) vorgesehen sind, der über der Verbindungszone der beiden Rohre aufzusetzen ist, und daß jede Lippe (3) des Längsschlitzes (2) mindestens ein Versteifungselement (5) aufweist, das sich zwischen der Lippe und jedem der entsprechenden kegelstumpfförmigen Enden der Hülse erstreckt.

2. Vorrichtung nach Anspruch 1, dadurch gekennzeichnet, daß jede Lippe (3) durch eine Umbiegung (4) verstärkt ist, die sich oberhalb des Längsschlitzes (2) parallel zu diesem erstreckt.

3. Vorrichtung nach Anspruch 2, dadurch gekennzeichnet, daß die Umbiegung (4) jeder Lippe ihrerseits durch mindestens eine zentrale Einprägung (4a) verstärkt ist.

4. Vorrichtung nach einem der Ansprüche 1 bis 3, dadurch gekennzeichnet, daß das Versteifungselement einer Lippe durch einen Keil gebildet ist, der sich in der Nähe eines kegelstumpfförmigen Endes der Hülse zwischen besagter Lippe und besagtem Ende erstreckt, wobei die Richtung des Keils gegenüber der durch seinen Ansatz auf der Lippe gehenden Querebene zur kleinen Endbasis des kegelstumpfförmigen Endes hin geneigt ist.

5. Vorrichtung nach Anspruch 1, dadurch gekennzeichnet, daß ein zusätzliches Dichtorgan (8) zumindest zwischen den Lippen (3) des Länggschlitzes (2) angeordnet ist.

6. Vorrichtung nach Anspruch 5, dadurch gekennzeichnet, daß das zusätzliche Dichtorgan durch ein Aufsatzstück (8) gebildet ist, dessen Querschnitt im allgemeinen U-förmig ist, wobei die beiden Seitenwände (8b) des Aufsatzstücks an den einander zugewandten Flächen der beiden radialen Lippen (3) in Auflage kommen können, wogegen sein Boden (8a) im Bereich des Längsschlitzes (2) an der von der Hülse nicht überdeckten Kontaktzone der beiden Rohre in Anlage kommen kann.

7. Vorrichtung nach Anspruch 6, dadurch gekennzeichnet, daß mindestens eine Pratze (9) an der Hülse vorgesehen ist und sich im Längsschlitz (2) erstreckt, welche Pratze mit einer Querrille (8e) zusammenwirkt, die nach außen hin im Boden (8a) des Aufsatzstücks vorgesehen ist.

8. Vorrichtung nach Anspruch 5, dadurch gekennzeichnet, daß das zusätzliche Dichtorgan durch ein aufgerolltes Metallband (20) gebildet ist, welches Band die einander zugewandten Enden der beiden Rohre vollständig umgibt, wobei eine zylindrische Aufnahme (11c) für das Organ innen im Mittelteil (11a) der Hülse vorgesehen ist.

9. Vorrichtung nach Anspruch 8, dadurch gekennzeichnet, daß die Enden (20a) des Metallbandes schräg abgeschnitten sind.

10. Vorrichtung nach Anspruch 8, dadurch gekennzeichnet, daß jeder der Längsränder des Metallbandes (20) mindestens eine Dichtungsleiste (20b) aufweist, die nach Aufrollen des Bandes von diesem nach innen ragt.

## Claims

1. Device for hermetically coupling two smooth tubes of the same diameter disposed end to end, particularly for coupling two elements of the exhaust pipe of an engine, such as those of motorvehicles, said device being constituted by a bush (1) in one piece comprising a longitudinal slot (2) provided with two radial assembly lips (3), said bush surrounding the opposite ends of the two tubes and being clamped thereon by a screw or a bolt (7) traversing said radial lips, characterized in that the bush (1) has two frusto-conical ends (1b) located on either side of a cylindrical central portion (1a) intended to be mounted astride the zone of connection of the two tubes and in that each lip (3) of the longitudinal slot (2) comprises at least one rigidifying element (5) extending between said lip and each of the corresponding frusto-conical ends of the bush.

2. Device according to claim 1, characterized in that each lip (3) is reinforced by a fold (4) extending above the longitudinal slot (2), parallel thereto.

3. Device according to claim 2, characterized in that the fold (4) of each lip is itself reinforced by at least one central stamped out part (4a).

4. Device according to any one of claims 1 to 3, characterized in that the rigidifying element of a lip is constituted by a gusset extending, in the vicinity of a frusto-conical end of the bush, between said lip and said end, the direction of said gusset being inclined, with respect to the transverse plane passing through its root on the lip, towards the terminal small base of the frusto-conical end.

5. Device according to claim 1, characterized in that a complementary sealing member (8) is disposed at least between the lips (3) of the longitudinal slot (2).

6. Device according to claim 5, characterized in that the complementary sealing member is constituted by a staple (8) of generally U-shaped section, the two sides (8b) of the staple being adapted to abut on the opposite faces of the two radial lips (3) while its bottom (8a) is adapted to abut, in the region of the longitudinal slot (2), on the zone of contact of the two tubes not covered by the bush.

7. Device according to claim 6, characterized in that at least one tab (9) is provided on the bush to extend in the longitudinal slot (2), said tab cooperating with a transverse groove (8e) made, towards the outside, in the bottom of the staple (8a).

8. Device according to claim 5, characterized in that the complementary sealing member is constituted by a metal band (20) on itself, said band completely surrounding the opposite ends of the two tubes, while a cylindrical housing (11c) for said member is provided in the inner central part (11a) of the bush.

9. Device according to claim 8, characterized in that the ends (20a) of the metal band are bevelled.

10. Device according to claim 8, characterized in that each of the longitudinal edges of the metal band (20) has at least one sealing bead (20b) projecting inwardly of the band after it has been wound on itself.
